Europäisches Patentamt

European Patent Office

Office européen des brevets

(11) Numéro de publication: **0 231 697**
**A1**

## (12) DEMANDE DE BREVET EUROPEEN

(21) Numéro de dépôt: **86402840.2**

(22) Date de dépôt: **17.12.86**

(51) Int. Cl.⁴: **H04N 1/10** , H04N 1/21 ,
H04N 1/028

(30) Priorité: **27.12.85 FR 8519281**

(43) Date de publication de la demande:
**12.08.87 Bulletin 87/33**

(84) Etats contractants désignés:
**DE GB IT NL**

(71) Demandeur: **Dreyfus, Bertrand Alain**
**114 rue de Damiette**
**F-91190 Gif sur Yvette(FR)**

(72) Inventeur: **Dreyfus, Bertrand Alain**
**114 rue de Damiette**
**F-91190 Gif sur Yvette(FR)**
Inventeur: **Godart, Jacques**
**21 rue Nationale**
**F-91300 Massy(FR)**

(54) Appareil portatif de photocopie de fragments de documents.

(57) L'invention concerne un appareil portatif de photocopie de petits fragments de documents.

Un boîtier plat (1) comporte une première face - (2) de lecture du document au moyen d'un dispositif à transfert de charges (4, 18), et au moins une roue incrémentale (6) qui, roulant sans glissement sur le document fournit une base de temps pour les pas de lecture (24). Il comporte une deuxième face (3) d'écriture, au moyen d'une imprimante matricielle - (12), et au moins une roue incrémentale (11). A chaque pas de lecture, les informations sont stockées en mémoire (16). Pour l'écriture, l'appareil est retourné, et la roue (11) d'écriture commande le transfert des données en mémoire (16) vers l'imprimante (12) à travers un amplificateur-multiplexeur - (17).

Application pour noter par photocopie locale une citation dans un texte, une équation, un graphisme.

**FIG.1**

## APPAREIL PORTATIF DE PHOTOCOPIE DE FRAGMENTS DE DOCUMENTS

La présente invention concerne un appareil portatif de photocopie et d'impression de fragments de textes, de graphismes ou d'images. L'appareil selon l'invention permet de prélever une phrase dans un texte, une équation, un graphique, et de recopier ces éléments sur papier pour les conserver en raison de leur intérêt pour l'utilisateur.

La photocopie est un moyen de reproduction actuellement très répandu, mais elle ne permet la reproduction partielle d'un document qu'à condition de masquer les parties du document à ne pas reproduire, ou de découper, dans le document entièrement photocopié, la partie intéressante. En outre, les dimensions du matériel de photocopie doivent être compatibles avec celles du document à photocopier et avec celles du support recevant la copie. Enfin, le matériel de photocopie connu, même le plus sophistiqué, est parfois portable, mais n'est pas portatif : on ne peut pas le porter sur soi, dans une poche par exemple.

L'objet de l'invention est un appareil miniaturisé, d'encombrement et de volume tel que son utilisateur peut l'avoir constamment en poche, à l'instar d'un portefeuille. Cet appareil présente au moins deux faces : une première face comporte un capteur optique matriciel qui, par défilement devant le document à reproduire, acquiert les informations et les met en mémoire. Une deuxième face comporte une tête d'impresion matricielle, telle qu'une tête d'imprimante à aiguilles. Lorsque le fragment de document à photocopier a été acquis par le capteur optique et mis en mémoire, le retournement de l'appareil selon l'invention permet de l'imprimer sur un support au moyen de la tête d'impression matricielle.

Cet appareil portatif permet donc de retenir une citation dans un texte, ou un graphisme, et d'en prendre note par photocopie partielle, localisée, en l'inscrivant sur une feuille de papier, ou un cahier de laboratoire par exemple. Il y a donc saisie-lecture suivie de la reproduction, de la seule partie du document dont la reproduction est souhaitée.

Le capteur de lecture, qui effectue la saisie optique du fragment de document, assure également la conversion électrique du signal optique : c'est un capteur linéaire de type dispositif à tranfert de charge DTC, également connu sous le nom de CCD (Charge Coupled Device en anglais). Ce capteur, de structure matricielle, détermine une ligne sur le document, et chaque cellule de la matrice identifie une zone de cette ligne sur le document, et fournit un signal électrique correspondant au blanc, au noir, ou aux teintes intermédiaires avec une dynamique qui permet de conserver les qualités de l'image.

Les signaux électriques émis par la matrice de DTC sont lus en parallèle ou en série, et transférés dans une mémoire, dans laquelle ils sont stockés. La lecture en parallèle ou en série dépend de l'organisation de la mémoire.

Pour imprimer le fragment de document qui a été lu, l'appareil de photocopie partielle est retourné. Les informations stockées en mémoire sont transférées à une tête d'impression matricielle, par l'intermédiaire d'un amplificateur, avec multiplexage après l'amplificateur, la tête d'impression ayant même structure matricielle que le capteur DTC et que la mémoire.

La base de temps ou horloge, au cours de toutes ces opérations, est fournie par un système de roues, deux au moins, dont l'une roule sans glissement sur le document et dont l'autre roule sans glissement sur le support de reproduction. Ces roues, qui ont mêmes caractéristiques, sont associées à des dispositifs çonnus et fournissent des impulsions électriques, correspondant aux pas de lecture -ou d'écriture -la largeur de chaque pas étant égale à la largeur d'une ligne lue par le capteur DTC.

De façon plus précise, l'invention consiste en un appareil portatif de photocopie de fragments de textes ou de graphismes, caractérisé en ce qu'il comporte :
-un capteur matriciel de saisie-lecture du fragment de document à reproduire,
-un dispositif éléctronique de mise en mémoire des informations provenant du capteur de lecture,
-un dispositif d'amplification et de multiplexage des informations provenant de la mémoire,
-un système matriciel d'impression, commandé par l'amplificateur-multiplexeur,
-le capteur matriciel et le système matriciel d'impression ayant même disposition matricielle,
-une base de temps, qui pilote l'horloge de commande des transferts d'informations du capteur vers la memoire puis de la mémoire vers le système d'impression étant fournie pa. la rotation d'au moins une roue incrémentale, qui roule sans glissement sur le support du document à reproduire.

L'invention sera mieux comprise par la description d'un exemple d'application de l'appareil de photocopie portatif, cette description s'appuyant sur les figures jointes en annexes, qui représentent :

-fig. 1 : schéma simplifié de l'appareil de photocopie portatif selon l'invention.

-fig. 2 : schéma de l'extrémité de lecture, dans un plan perpendiculaire au plan de la figure précédente.

-fig. 3 : mode de lecture d'un document, par une barrette linéaire de DTC.

-fig. 4 : schéma électrique simplifié de l'appareil de photocopie portatif.

-fig. 5 : mode de lecture d'un document de dimensions plus grandes que la longueur de la fenêtre de la barrette de DTC.

-fig. 6 : appareil de photocopie portatif dans une variante de réalisation.

Un bref rappel de la nature et des caractéristiques des dispositifs à transfert de charge DTC permettra de mieux comprendre, dans la suite du texte, le fonctionnement de l'appareil selon l'invention.

La structure d'un DTC est celle d'un registre à décalage analogique. Elle est constituée d'un réseau d'électrodes déposé sur du silicium oxydé. Chaque électrode forme avec le substrat en silicium une capacité MOS, qui permet de stocker des charges électriques.

Le faible intervalle séparant ces capacités - puisque les DTC sont réalisés selon la technologie des circuits intégrés, -crée entre elles un couplage tel qu'une différence de potentiel appliquée entre deux capacités adjacentes induit un champ électrique qui déplace les charges d'une capacité vers l'autre. L'application séquentielle aux électrodes alternées de tensions en opposition de phase déplace les charges de proche en proche jusqu'à un collecteur sur lequel s'effectue la lecture du signal.

Les informations ou charges stockées peuvent être injectées par effet photoélectrique. En effet, lorsque le silicium est irradié par de la lumière visible ou proche infra-rouge, des paires électrontrou sont engendrées, par détection des photons incidents. Les porteurs de charge ainsi crées dans les photodiodes sont localisés dans les capacités MOS du dispositif sous l'action des tensions appliquées aux électrodes. La quantité de charges intégrées dans chaque puit de potentiel est proportionnelle à l'éclairement local et permet d'obtenir un signal analogique échantillonné représentatif de l'image analysée.

La lecture peut se faire en série ou en parallèle.

Dans les dispositifs photosensibles linéaires, conçus pour des systèmes d'analyse assurant un balayage ligne à ligne par défilement relatif de l'image et du capteur, une ligne de photodiodes est associée à deux registres de lecture à transfert de charge. Un registre lit les charges accumulées dans les photodiodes de rang pair, et l'autre celles accumulées dans les photodiodes de rang impair.

Ces dispositifs nécessitent deux phases de commandes externes, les autres signaux de commande étant engendrés par un circuit logique, intégré sur la pastille de circuit intégré du DTC.

Néanmoins, la mise en oeuvre des DTC nécessite l'emploi de circuits périphériques assurant différentes fonctions de commandes : génération de signaux d'horloge, commande des circuits de lecture des charges, amplification différentielle en sortie.

Dans l'appareil de photocopie portatif selon l'invention, la génération de signaux d'horloge est pilotée par une roue incrémentale qui fournit une impulsion à chaque pas de lecture.

Bien que la plupart des DTC soient conçus pour fonctionner avec des signaux de commande en deux phases, les dispositifs à trois ou quatre phases peuvent par contre être plus simples à réaliser du point de vue technologique.

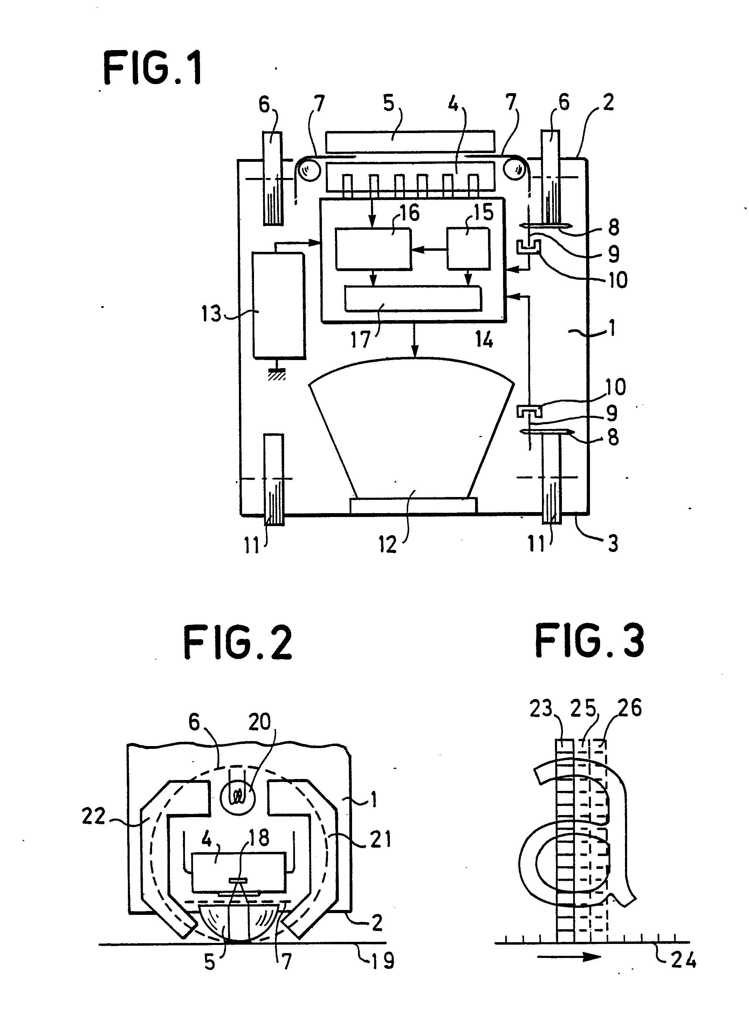

Le schéma simplifié de l'appareil de photocopie portatif utilisant un dispositif à transfert de charge est représenté en figure 1.

Il est assemblé à l'intérieur d'un boitier 1, de préférence de forme plate, mais comportant au moins deux faces substantiellement planes 2 et 3, parce que les documents à photocopier et les supports de reproduction sont généralement plans. La première face 2 est la face de lecture, supportant le capteur, et la deuxième face 3 est la face d'écriture, supportant la tête d'impression. Ces deux faces peuvent être adjacentes, mais elles sont préférentiellement opposées, de sorte qu'on lit avec une extrémité de l'appareil, et on écrit avec l'autre extrémité, après l'avoir retourné.

La face de lecture 2 comporte une ouverture qui correspond à la barrette photosensible du circuit DTC 4. Une lentille hémicylindrique 5, placée en vis à vis de la barrette photosensible, de faible ouverture, fournit à la fois un moyen d'appui de l'appareil sur le document à photocopier, et un espacement entre DTC et document, permettant l'éclairage du document. Cet écartement justifie le fait qu'il faille former une image du document sur le DTC, sinon la reproduction ne serait pas précise.

Au moins une roue 6 -mais de préférence deux roues, car cela facilite le déplacement de l'appareil en restant parallèle à lui-même -est placée à côté du DTC. L'axe de la roue 6 est parallèle à l'axe longitudinal de la barrette de DTC. La roue est crantée ou en élastomère, de sorte qu'elle roule sans glissement sur le document .

Etant donné que les DTC disponibles commercialement ont des longueurs de barrettes photosensibles comprises entre 13,3 mm et 26,6 mm, deux volets 7, amovibles devant la barrette photosensible permettant de régler la largeur de la plage photocopiée : ils sont refermés à environ 1 cm d'écart s'il faut photocopier une ligne de texte, et ouverts au maximum s'il faut photocopier un graphique ou un tableau de données.

Pour fournir une base de temps, et incrémenter la lecture en pas à pas, la roue 6 peut, par exemple, frotter tangentiellement sur un axe 8 de faible diamètre, ce qui crée une multiplication de la vitesse de rotation. L'axe 8 entraine lui-même un disque incrémental 9, comportant par exemple des régions magnétiques et des régions amagnétiques. Le défilement de ces régions devant un détecteur de proximité permet de fournir un signal d'horloge H qui incrémente la lecture du document.

Tout autre dispositif de transformation du mouvement de rotation de la roue 6 en un train de signaux éléctriques d'horloge H convient également, sans sortir du domaine de l'invention.

La face d'écriture 3 comporte également une roue 11 -mais de préférence deux roues pour les raisons précédemment avancées -. Au moins une roue 11 est équipée de la même façon que la roue 6, de façon à fournir la même base de temps lorsqu'elle roule sur le support de reproduction. La roue 11 n'a pas obligatoirement le même diamètre que la roue 6 : dans ce cas le système de codage 9-10 déplacement -signal électrique est modifié pour que, à un pas de lecture sur la roue 6, corresponde un pas d'ecriture sur la roue 11. Mais les roues 6, d'une part, et les roues 11, d'autre part, doivent avoir deux à deux le même diamètre.

La seconde face 3 comporte également une fenêtre, qui permet l'impression au moyen d'une tête d'imprimante à aiguilles 12, par exemple.

L'intérieur du boitier 1 de l'appareil contient une source d'énergie 13, par exemple une pile de 12 ou 15 V, tension nécessaire pour faire fonctionner un DTC. Mais cette pile peut avantageusement être remplacée par une petite alimentation stabilisée sur secteur : le fait d'être tributaire du secteur, et d'y être relié par un cordon d'alimentation n'est pas une gêne dans la plupart des cas, et n'empêche pas l'appareil d'être portatif.

Un circuit 14, imprimé ou hydride, comprend essentiellement une horloge 15, qui fournit tous les signaux de commande du système, une mémoire vive 16 et un circuit d'amplification et de multiplexage 17 vers les cellules de l'imprimante matricielle 12.

Le détail de ce circuit sera exposé ultérieurement.

La figure 2 donne, dans un plan perpendiculaire à l'axe de lecture, une vue partielle agrandie de la face de saisie-lecture.

Le circuit intégré de DTC 4 est fixé, à l'intérieur du boitier 1, contre la face 2, dans laquelle une fenêtre correspond en dimensions et position à la barrette photosensible 18 du DTC. Une lentille hémicylindrique 5 est maintenue -par des moyens qui ne sont pas représentés -à une faible distance devant la fenêtre et la barrette 18, de telle sorte que les volets 7, représentés en pointillés, puissent coulisser devant la barrette 18 pour en limiter la longueur utile. La lentille 5 s'appuie sur le document 19 à photocopier.

Les cellules d'un DTC ont des dimensions de l'ordre de 13x13 microns, mais l'épaisseur du boitier de l'appareil peut difficilement être inférieure à 2 cm, du côté de la face de lecture 2, puisqu'un circuit intégré DTC est monté dans un boitier de 1,5 cm de largeur. Par conséquent, il est préférable d'éclairer le document à photocopier 19, pour que le contraste soit meilleur, bien que les DTC aient une très grande dynamique, comprise entre 3500/1 et 5500/1.

Un système d'éclairage est représenté sur la figure 2. Il comprend une source lumineuse 20, une petite ampoule électrique, située à l'intérieur du boîtier 1. La lumière émise est guidée, vers la ligne du document 19 qui est lue par le DTC, au moyen de deux guides de lumière 21 et 22. Ceux-ci peuvent être des pièces en matériau polymère translucide, comme le polymétacrylate de méthyle, de forme appropriée ou, comme représenté, munies de faces qui font office de miroir, pour guider le lumière vers le document lu. Ce peut être également un faisceau de fibres optiques. D'autres solutions, connues de l'homme de l'art, font partie du domaine de l'invention.

La face 2 de l'appareil étant de ce fait éloignée de quelques millimètres -de 2 à 5 mm environ -il est nécessaire que la lentille 5 définisse un champ de lecture ayant une largeur égale à la largeur de la barrette photosensible 18, et forme une image du document 19 sur cette barrette. Sinon, la barrette intègre une région plus large du document, en raison de l'écartement document 19 -barrette 18.

La roue 6 est représentée en pointillé. Il est préférable que la roue soit alignée par rapport à la lentille 5, de façon que ces deux pièces soient en contact avec le document 19 selon une seule et même génératrice. Cela garantit que, quelque soit l'inclinaison donnée à l'appareil, par rapport au document, la roue est en contact, tourne, et engendre une base de temps.

Le mode de saisie-lecture du document par l'appareil selon l'invention est illustré en figure 3. La lecture se fait par déplacement devant le document, en suivant une ligne, de la tête de lecture à DTC. L'excursion d'un graphisme est opérée par colonnes, chaque colonne telle que 23 correspondant à l'image reçue par la barrette de DTC 18, et à un pas incrémental : l'échelle des pas est représentée en 24. Les informations de chaque cellule de la barrette 18, définissant le graphisme d'une colonne 23, sont transférées en mémoire à chaque pas 24.

Au lieu d'utiliser un DTC linéaire, ne comportant qu'une seule ligne de photodiodes, on peut également utiliser un DTC matriciel, comportant une région photosensible composée d'une pluralité de lignes de photodiodes : il existe des capteurs matriciels de 576 lignes comportant chacune 384 points élémentaires.

Dans ce cas la saisie-lecture du document se fait bloc par bloc, et le transfert en mémoire des informations d'un bloc de colonnes telles que 23, 25, 26 se fait selon un pas correspondant à celui des colonnes. Par exemple, le contenu de chaque colonne est transféré en parallèle en mémoire, mais les colonnes sont transférées en série : la collonne 23, puis la colonne 25, puis la colonne 26, si la lecture est effectuée avec un mouvement d'excursion de la gauche vers la droite.

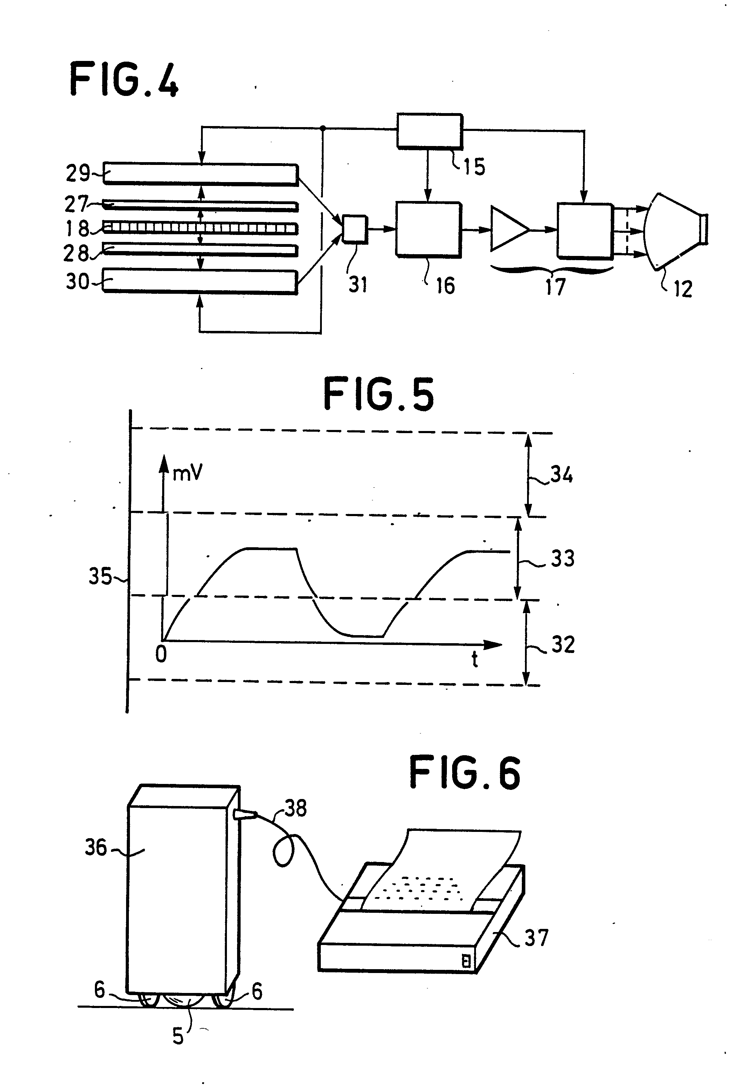

La figure 4 représente le schéma électrique par blocs de l'appareil selon l'invention.

La ligne photosensible de la barrette DTC 18 comporte une pluralité de photoéléments -par exemple 1728 -chacun d'eux étant constitué par une photodiode n-p recouverte d'une couche de silice, associée à une capacité MOS qui accumule les électrons créés par la lumière. La quantité de charges accumulées est proportionnelle à l'éclairement reçu et au temps d'intégration.

De chaque côté de la ligne photosensible, une grille de passage 27 ou 28, isole la ligne photosensible 18 des registres de lecture 29 ou 30 par l'intermédiaire d'une barrière de potentiel. L'ouverture de cette barrière permet le transfert en parallèle des charges accumulées dans la zone photosensible vers les registres de lecture.

Les paquets de charges issus de chaque registre sont multiplexés dans une diode 31 de lecture commune, assurant la conversion charge-tension. Entre chaque arrivée d'un paquet de charges, le potentiel de la diode de lecture 31 est fixé à un niveau de référence par un transistor MOS de remise à niveau commandé par l'horloge 15, elle-même pilotée par la roue incrémentale 6.

Le potentiel de la diode de lecture 31 est appliqué à l'entrée d'une mémoire vive 16, à entrée série, sous contrôle de l'horloge 15.

Ce processus comprend une acquisition en parallèle, avec transfert aux registres 29 et 30 en parallèle, puis inscription dans la mémoire 16 en série. D'autres processus sont également possibles, selon la configuration du circuit intégré DTC utilisé : l'inscription du contenu des registres 29 et 30 peut tout aussi bien se faire en parallèle dans la mémoire 16, mais ce procédé est limité par le nombre de connexions de la mémoire disponibles.

Pour lire le contenu de la mémoire 16, c'est-à-dire l'imprimer sur un support de reproduction, au moyen de l'imprimante matricielle 12, il est nécessaire d'amplifier les signaux issus de la mémoire. La lecture en parallèle du contenu de la mémoire est impossible, en raison du grand nombre de points élémentaires de la barrette photosensible 18, qui nécessiteraient un même nombre d'amplificateurs, pour conserver la même matrice en lecture et en écriture.

C'est pourquoi les signaux issus de la mémoire 16 sont lus en série, puis amplifiés par un unique amplificateur-multiplexeur 17, avant d'être adressés à l'imprimante matricielle 12. Le fait de lire les signaux en série introduit entre eux un décalage temporel, qui est répercuté sur l'actionnement des aiguilles si l'imprimante est du type à aiguilles. Mais on sait lire une mémoire et multiplexer à des fréquences de plusieurs mégahertz, de sorte que le décalage dans l'actionnement des aiguilles est imperceptible sur le document ainsi reproduit.

La figure 5 représente le mode de lecture d'un document de dimensions plus grandes que la longueur de la barrette photosensible DTC.

Soit par exemple à photocopier un diagramme, donnant la variation d'une tension en fonction du temps. Très généralement, de tels diagrammes -ou tout autre graphisme -ont un axe d'ordonnées de dimensions supérieures à 13,3 ou 26,6 mm, qui sont des longueurs courantes de barrettes DTC. Il faut donc, pour reproduire ce diagramme ou ce graphisme procéder à plusieurs excursions de l'image. Une première excursion de l'appareil de photocopie, volets 7 ouverts au maximum, permet d'acquérir une première plage 32 du diagramme, une deuxième excursion permet d'acquérir une seconde plage 33 du diagramme, et ainsi de suite jusqu'à ce que toute l'image soit lue.

Pour que la reproduction soit bonne et que les différentes plages acquises soient en concordance, il faut qu'elles aient même origine. Ceci est obtenu en traçant une ligne 35 bien nette et bien noire, à gauche du graphisme si l'excursion a lieu de la gauche vers la droite. Cette ligne sera lue par le capteur DTC, et fournira un signal d'origine de l'image. Ainsi, l'imprecision, au cours de la reproduction, sera au maximum d'un pas de lecture -24 sur la figure 3 -soit inférieure à une largeur de la ligne 35, comme cela est représenté en figure 5.

Enfin, la figure 6 représente une variante de l'appareil de photocopie selon l'invention.

Dans l'appareil tel qu'il a été décrit, la partie la plus volumineuse et la plus lourde est l'imprimante matricielle électromécanique, bien que les performances de celle-ci soient inférieures aux performances de la partie purement électronique de l'appareil. On connaît des circuits intégrés DTC comportant une barrette linéaire de 2048 photodiodes, et des circuits intégrés de mémoire de 64 kbits et plus, ce qui autorise une très grande fidélité de reproduction. Mais on ne connaît pas, actuellement, d'imprimante matricielle portative de 2048 aiguilles par exemple.

C'est pourquoi une variante de l'invention, telle que représentée en figure 6, consiste à réaliser un appareil de saisie lecture 36, relié à une petite imprimante matricielle 37 par un cordon 38.

Dans cette variante, l'appareil de lecture 36 comporte à l'exception de l'imprimante 12 toute la partie électronique, telle qu'elle a été décrite : circuit intégré DTC 4, alimentation 13, horloge 15, mémoire 16, amplificateur-multiplexeur 17 et bien entendu le système de base de temps établi par la roue 6.

L'imprimante portative 37 est une petite imprimante matricielle disponible commercialement, par exemple à barrette thermique. La définition des imprimantes thermiques est de l'ordre de 10 points par millimètre.

Etant donné que l'appareil de photocopie ne se déplace plus sur le support de reproduction, dans la présente variante, il faut incrémenter l'avancement du papier de l'imprimante 37. Ceci est obtenu en déplaçant l'appareil de lecture 36 sur un support neutre, par exemple une feuille de papier blanc. La roue 6, dans sa rotation, engendre une base de temps, qui permet d'incrémenter l'avance du papier de l'imprimante 37, et qui, en même temps, commande la lecture du contenu de la mémoire 16.

L'appareil de photocopie portatif selon l'invention est appliqué à la saisie et copie de fragments de textes littéraires ou scientifiques, de graphismes ou images, lorsque la photocopie du texte dans son ensemble n'est pas recherchée.

La description qui en a été faite n'est pas limitative de la portée de l'invention, qui peut être réalisée avec d'autres moyens équivalents, évidents pour l'homme de l'art. Dans son esprit, l'invention est précisée par les revendications suivantes.

## Revendications

1 Appareil portatif de photocopie de fragments de textes ou de graphismes, par déplacement linéaire de l'appareil par rapport à un document, comportant au moins une roue incrémentale (6) qui roule sans glissement sur le support (19) du document à reproduire, et dont la rotation fournit une base de temps pour l'acquisition de données et leur restitution, cet appareil étant caractérisé en ce qu'il comporte :

-un capteur (4) matriciel de saisie-lecture du fragment de document à reproduire,

-un dispositif électronique de mise en mémoire - (16) des informations provenant du capteur (4) de lecture,

-un dispositif d'amplification et de multiplexage - (17) des informations provenant de la mémoire - (16),

-un système matriciel d'impression (12), commandé par l'amplificateur-multiplexeur (17),

-le capteur matriciel (4) et le système matriciel d'impression (12) ayant même disposition matricielle,

-la base de temps, fournira par la rotation d'au moins une roue incrémentale (6) servant à piloter une horloge (15) de commande des transferts, à chaque pas d'horloge, des informations acquises par le capteur (4) vers la mémoire (16) au cours du cycle de lecture, puis de la mémoire (16) vers le système d'impression (12), au cours du cycle d'impression.

2 Appareil portatif de photocopie selon la revendication 1, caractérisé en ce qu'il est contenu dans un boîtier (1) possédant au moins deux faces substantiellement planes, non adjacentes, la première face (2), dite de lecture, supportant le capteur (4) de lecture et au moins une roue (6) incrémentée de base de temps, la seconde face - (3), dite d'écriture, supportant le système matriciel d'impression (12) et au moins une roue (11) incrémentée, fournissant la même base de temps que la roue (6) de la face de lecture.

3 Appareil portatif de photocopie selon la revendication 1, caractérisé en ce que la capteur matriciel (4) de lecture est un dispositif à transfert de charges, linéaire (18).

4 Appareil portatif de photocopie selon la revendication 1, caractérisé en ce que au moins un volet (7), placé devant la fenêtre du capteur de lecture (4) règle la largeur de la plage photocopiée sur le document à reproduire (19).

5 Appareil portatif de photocopie selon la revendication 1, caractérisé en ce qu'une lentille hémicylindrique (5), placée devant la fenêtre du capteur (4), focalise l'image du document (19) à reproduire sur le capteur (4) et crée un espace entre le document (19) et le capteur (4), permettant l'éclairage du document.

6 Appareil portatif de photocpie selon la revendication 3, caractérisé en ce que les informations de signaux électriques provenant du dispositif à transfert de charges (18) sont transférées en série ou en parallèle dans une mémoire vive (16), pour stockage, puis transférées en série dans un amplificateur -multiplexeur (17), et adressées à une imprimante matricielle (12).

.7 Appareil portatif de photocopie selon la revendication 6, caractérisé en ce que le transfert des informations de lecture du dispositif à transfert de charges (18) vers la mémoire (16) est commandé, à chaque pas de lecture (24), par la rotation d'une roue incrémentale (6), située sur la face de lecture (2) du boitier de l'appareil.

8 Appareil portatif de photocopie selon la revendication 6, caractérisé en ce que le transfert des informations stockées en mémoire (16) vers l'imprimante matricielle (12) est commandé par la rotation d'au moins une roue incrémentale (11), située sur la face d'écriture (3) du boitier de l'appareil, ladite roue (11) ayant même pas d'écriture que le pas de lecture de la roue (6) située sur la face de lecture (2).

9 Appareil portatif de photocopie selon la revendication 5, caractérisé en ce qu'une source lumineuse (20), placée à l'intérieur du boîtier de l'appareil, est associée à au moins un guide de lumière (21) pour l'éclairage de la plage du document à reproduire.

10 Appareil portatif de photocopie selon la revendication 1, caractérisé en ce que le système matriciel d'impression (12) est une imprimante à aiguilles.

11 Appareil portatif de photocopie selon la revendication 1, caractérisé en ce que le système d'impression est une imprimante matricielle (37), reliée par un cordon de conducteurs électriques (38) au boîtier d'un appareil portatif (36) contenant les dispositifs de lecture (4, 18, 5, 7) et de traitement des informations (15, 16, 17) et au moins une roue incrémentale (6) fournissant une base de temps qui commande d'abord la lecture d'un document, et ensuite l'impression sur un support de reproduction.

# FIG.1

# FIG.2

# FIG.3

# FIG.4

# FIG.5

# FIG.6

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int. Cl.4) |
|---|---|---|---|
| X | PATENTS ABSTRACTS OF JAPAN, vol. 4, no. 170 (E-35)[652], 22 Novembre 1980; & JP-A-55 115 773 (RICOH K.K.) 05-09-1980 | 1,3,11 | H 04 N    1/10<br>H 04 N    1/21<br>H 04 N    1/028 |
| Y | Idem | 10 | |
| A | Idem | 7,8 | |
|  | --- | | |
| A | GB-A-2 082 874  (XEROX)<br>* Page 1, lignes 3-70 * | 2,6,10 | |
|  | --- | | |
| A | EP-A-0 146 472  (SONY)<br>* Résumé * | 3 | |
|  | --- | | DOMAINES TECHNIQUES RECHERCHES (Int. Cl.4) |
| A | ELECTRONIC ENGINEERING, vol. 44, no. 529, mars 1972, pages 35-37, Londres, GB; D. PORTER: "Integrated arrays offer many advantages in o.c.r. systems" * Figure 3 * | 5,9 | H 04 N |
|  | --- | | |
| A | FR-A-2 480 462  (BERTIN)<br>* Figure 1 * | 5,9 | |
|  | --- | | |
| Y | US-A-3 325 821  (REESE et al.)<br>* Colonne 9, lignes 14-40 * | 10 | |
|  | ----- | | |

Le present rapport de recherche a ete etabli pour toutes les revendications

| Lieu de la recherche | Date d'achevement de la recherche | Examinateur |
|---|---|---|
| LA HAYE | 03-03-1987 | SCHOENE, K.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82